(19) Europäisches Patentamt
European Patent Office
Office européen des brevets

(11) Veröffentlichungsnummer: 0 285 880 A2

(12) # EUROPÄISCHE PATENTANMELDUNG

(21) Anmeldenummer: 88104320.2

(22) Anmeldetag: 18.03.88

(51) Int. Cl.4: A01N 43/653 , A01N 43/90 , A01N 57/20 , A01N 57/22 , A01N 57/28

(30) Priorität: 25.03.87 DE 3709806

(43) Veröffentlichungstag der Anmeldung: 12.10.88 Patentblatt 88/41

(84) Benannte Vertragsstaaten: BE DE ES FR GB IT NL

(71) Anmelder: BASF Aktiengesellschaft
Carl-Bosch-Strasse 38
D-6700 Ludwigshafen(DE)

(72) Erfinder: Schott, Eberhard Peter, Dr.
Oelbergstrasse 27
D-6730 Neustadt(DE)
Erfinder: Luib, Max, Dr.
Schlangenthaler Weg 32a
D-6702 Bad Duerkheim(DE)
Erfinder: Hoeppner, Peter
Wilhelm-Gisbertz-Strasse 8
D-6730 Neustadt(DE)
Erfinder: Lang, Hans, Dr.
Trifelsring 31
D-6703 Limburgerhof(DE)
Erfinder: Schelberger, Klaus
Traminerweg 2
D-6701 Goennheim(DE)
Erfinder: Sauter, Hubert, Dr.
Neckarpromenade 20
D-6800 Mannheim 1(DE)
Erfinder: Buschmann, Ernst, Dr.
Georg-Ludwig-Krebs-Strasse 10
D-6700 Ludwigshafen(DE)

(54) **Mittel zur Regulierung des Pflanzenwachstums.**

(57) Mittel zur Regulierung der Pflanzenentwicklung, enthaltend eine synergistische Mischung aus einer wachstumsregulatorisch wirksamen Triazolverbindung der allgemeinen Formel Ia, Ib, Ic oder Id

EP 0 285 880 A2

Xerox Copy Centre

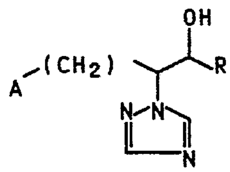

Ia

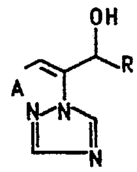

Ib

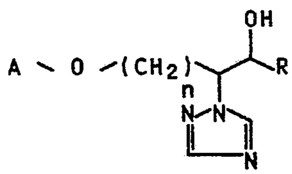

Ic

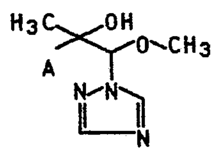

Id

wobei A unsubstituiertes oder durch Halogen, $C_1$-$C_4$-Alkyl, $C_1$-$C_4$-Alkoxy oder $CF_3$ substituiertes Phenyl und R tert.-Butyl oder die Gruppe

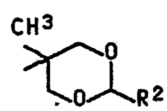

in der $R^2$ für Wasserstoff, Methyl oder Ethyl steht, bedeutet und n eine ganze Zahl von 2 bis 5 darstellt und entweder
einem quaternär substituierten Thianium-oder Ammoniumsalz aus der Gruppe, die umfaßt:
N,N-Dimethyl-azacycloheptaniumsalze
N,N-Dimethyl-piperidiniumsalze
N,N-Dimethyl-hexahydropyridaziniumsalze
N,N-Dimethyl-tetrahydropyridaziniumsalze
N-Methyl-pyridiumsalze
N,N-Dimethyl-pyrrolidiumsalze
S-Methyl-thiacyclohexaniumsalze und
N,N,N-Trimethyl-N-2-chlorethylammoniumsalz
und oder
einer Phosphonsäureverbindung aus der Gruppe, die umfaßt
2-Chlorethylphosphonsäure
2-Chlorethylaminoethylphosphonsäure
2-Chlorethylaminobutylphosphonsäure
2-Chlorethylphosphonsäure-N,N-dimethylamid
2-Chlorethylphosphonsäure-N-methylamid
Vinylphosphonsäure
Propylphosphonsäure
Phosphonmethylglycin
Bis-phosphonomethylglycin und
Benzyl-phosphonsäure

und/oder
die Verbindung 5-(4-Chlorophenyl)-3,4,5,9,10-pentaaza-tetra-cyclo-[5,4,1,$0^{2,6}$,$0^{8,11}$]dodeca-3,9-dien.

## Mittel zur Regulierung des Pflanzenwachstums

Die Erfindung betrifft Mittel zur Regulierung der Pflanzenentwicklung, welche eine Mischung von Wirkstoffen enthalten und Verfahren zur Regulierung der Pflanzenentwicklung mit diesen Mitteln.

Es ist bekannt, bioregulatorische Triazole, quaternäre Ammoniumverbindungen, z.B. N,N-Dimethyl-piperidiniumsalze (DE-OS 22 07 575) oder Phosphonsäurederivate, z.B. 2-Chlorethylphosphonsäure und deren Salze (DE-AS 16 67 968) zur Regulierung der Pflanzenentwicklung zu verwenden. Es ist ferner bekannt, Mischungen bzw. Salze von N,N,N-Trimethyl-N-2-chlorethylammoniumverbindungen oder N,N-Dimethyl-piperidiniumverbindungen und 2-Chlorethanphosphonsäure zur Regulierung der Pflanzenentwicklung zu verwenden (DE-OS 23 61 410, DE-OS 24 22 807, DE-PS 27 55 940).

Es wurde nun gefunden, daß eine Mischung aus einer wachstumsregulatorisch wirksamen Triazolverbindung der allgemeinen Formel Ia, Ib, Ic oder Id

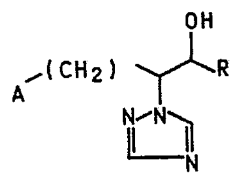

Ia

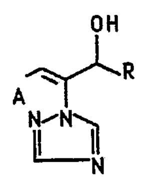

Ib

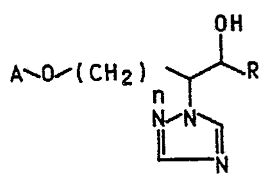

Ic

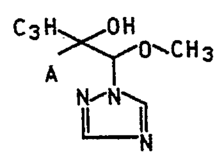

Id

wobei A unsubstituiertes oder durch Halogen, $C_1$-$C_4$-Alkyl, $C_1$-$C_4$-Alkoxy oder $CF_3$ substituiertes Phenyl und R tert.-Butyl oder die Gruppe

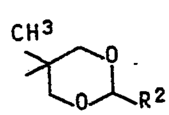

bedeutet, in der $R^2$ für Wasserstoff, Methyl oder Ethyl steht

und

entweder einem quaternären Thianium-oder Ammoniumsalz aus der Gruppe, die umfaßt

N,N-Dimethyl-azacycloheptaniumsalze

N,N-Dimethyl-piperidiniumsalze

N,N-Dimethyl-hexahydropyridaziniumsalze

N,N-Dimethyl-tetrahydropyridaziniumsalze

N-Methyl-pyridiumsalze
N,N-Dimethyl-pyrrolidiumsalze
S-Methyl-thiacyclohexaniumsalze und
N,N,N-Trimethyl-N-2-chlorethylammoniumsalz
und/oder
einer Phosphonsäureverbindung aus der Gruppe, die umfaßt
2-Chlorethylphosphonsäure
2-Chlorethylaminoethylphosphonsäure
2-Chlorethylaminobutylphosphonsäure
2-Chlorethylphosphonsäure-N,N-dimethylamid
2-Chlorethylphosphonsäure-N-methylamid
Vinylphosphonsäure
Propylphosphonsäure
Phosphonomethylglycin
Bis-phosphonomethylglycin und
Benzyl-phosphonsäure
oder
der Verbindung 5-(4-chlorophenyl)-3,4,5,9,10-pentaaza-tetra-cyclo-[5,4,1,$0^{2,6}$,$0^{8,11}$]dodeca-3,9-dien besonders gut zur Regulierung der Pflanzenentwicklung geeignet sind, da ein synergistischer Effekt zu beobachten ist.

Die Mischung kann neben der Triazolverbindung Wirkstoffe aus mehreren der vorstehenden Klassen von anderen Verbindungen enthalten.

In den Formeln Ia bis Id steht A für einen gegebenenfalls substituierten Phenylrest. Als Substituenten kommen Halogen wie Fluor, Chlor, Brom oder Jod, $C_1$-bis $C_4$-Alkyl oder -Alkoxy, z.B. Methyl, Ethyl, Propyl, Isopropyl, Butyl, sec-Butyl, tert.Butyl oder die entsprechenden Alkoxyreste sowie $CF_3$ in Frage. Der Phenylrest kann ein oder mehrere, vorzugsweise 1 bis 3, gleiche oder verschiedene Substituenten tragen. Bevorzugt steht A für Phenyl, 2,4-Dichlorphenyl, 4-Trifluormethylphenyl oder 4-Methylphenyl.

In der Formel Ic bedeutet n eine ganze Zahl 2, 3, 4 oder 5, insbesondere 2.

Die Herstellung der an sich bekannten Triazolverbindungen Ia bis Id ist den europäischen Anmeldungen 44 407, 40 350, 43 923 und 56 087 zu entnehmen.

Unter Thianium-oder Ammoniumsalzen sind Salze einer anorganischen oder organischen, jedoch nicht phytotoxischen Säure zu verstehen. Vorzugsweise werden Halogenide wie Bromide oder insbesondere Chloride verwendet.

Insbesondere Mischungen aus einem oder mehreren Triazolen wie z.B. 1-(2,4-Dichlorphenyl)-1-methyl-2-methoxy-2-(1<u>H</u>-1,2,4-triazol-1-yl)ethanol; 1-Phenoxy-3-(1<u>H</u>-1,2,4-triazol-1-yl)-4-hydroxy-5,5-dimethylhexan; 1-(4-Trifluormethylphenyl)-2-(1,2,4-triazol-1-yl)-3-(5-methyl-1,3-dioxan-5-yl)-propen-3-ol; 1-(2-Ethyl-5-methyl-1,3-dioxan-5-yl)-2-(1,2,4-triazolyl-(1))-3-(4-methylphenyl)-propan-1-ol mit einem 5-(4-Chlorophenyl)3,4,5,9,10-pentaaza-tetracyclo[5,4,1,$0^{2,6}$,$0^{8,11}$]dodeca-3,9-dien, N,N,N-Trimethyl-N-2-chlorethylammoniumchlorid, N,N-Dimethylpiperidiniumchlorid und/oder 2-Chlorethylphosphonsäure haben eine gute entwicklungsregulierende Wirkung bei Pflanzen.

Das Mischungsverhältnis der Wirkstoffe kann in breiten Grenzen schwanken, beispielsweise können 30:1 bis 1:30, vorzugsweise 10:1 bis 1:25 Gewichtsteile der Triazolverbindung, bezogen auf den/die Zusatzwirkstoffe in der Mischung, vorliegen.

Regulierung der Pflanzenentwicklung ist beispielsweise:

- Hemmung der Zellstreckung, z.B. Halm, Stengel, Ast, Stamm, Verstärkung der Halmwand und dadurch Verbesserung der Standfestigkeit als Voraussetzung für eine Ertragssicherung bei Getreide, anderen Gramineen, Ölsaaten, Leguminosen, Faserpflanzen bzw. bei Baumkulturen zur Arbeitserleichterung und Erhöhung der Bestandesdichte;
- Verbesserung der Jungpflanzenanzucht durch kompaktere Wuchsform;
- Kompakter Wuchs bei Zierpflanzen zur wirtschaftlichen Produktion von besseren Qualitätspflanzen;
- Verbesserung der Kälte-, Wärme-, Wassermangel-und Salztoleranz;
- Förderung einer besseren Befruchtung, z.B. verstärkter Fruchtansatz bei Kern-, Stein-und Beerenobst, Baumwolle, Soja, Wein, Citrus, Mandeln, Oliven, Kakao und Kaffee;
- Gezielte Geschlechtsdifferenzierung mit dem Ziele einer Ertragssteigerung, z.B. bei Cucurbitaceen und Papaya;
- Förderung einer gewünschten Senescens bzw. der Ausbildung von Trenngewebe mit dem Ziel der Abszission, z.B. Verringerung der Fruchtfesthaltekraft zur Erleichterung der mechanischen Ernte von Citrus, Stein-, Kern-und Beerenobst, Oliven, Mandeln, Kaffee und Schalenfrüchten;

- Entlaubung von Baumschul-und Ziergehölzen für Versandhandel im Herbst;
- Entlaubung von Bäumen zum Zwecke der Unterbrechung von parasitären Infektionsketten, z.B. Gloeosporium heveae bei Hevea brasiliensis;
- Förderung der Reife, z.B. bei Tomaten, Citrus, Ananas, anderen Obstarten und Kaffee mit dem Ziel einer programmierbaren Ernte und besseren Fruchtausfärbung oder bei Baumwolle mit dem Ziel einer auf 1-2 Pflückgänge konzentrierbaren Ernte und Unterbrechung der Nahrungskette für Schadinsekten.
- Ertragssteigerung infolge günstigere Entwicklungsbedingungen (z.B. optimaleres Mikroklima im Pflanzenbestand und/oder Wasser-und/oder Nährstoffausnutzung).

Die neuen Mischungen bzw. die Anwendungsfolge verschiedener Wirkstoffe zeigen insbesondere bei Getreide, Ölpflanzen und Leguminosen eine synergistische Wirkung, d.h. die Wirkung der Mischung bzw. Anwendungsfolge ist besser als sich aus den Wirkungen der Einzelwirkstoffe berechnen läßt. Sie zeigen außerdem eine bessere Pflanzenverträglichkeit als bekannte Wirkstoffe.

Die Anwendung kann so geschehen, daß entweder die Mischung oder die jeweiligen Einzelwirkstoffe der Kombination nacheinander ausgebracht werden. Die Behandlung der Pflanze kann erfolgen z.B. als Saatgutbeize, Nachauflaufbodenbehandlung und Behandlung von Stecklingen oder Pflanzenteile zu jedem Entwicklungsstadium der Pflanze von der Samenruhe bis zur Phase der Reife und Seneszens.

Die Mittel werden beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreichen, Verstreuen, Gießen oder Injektion angewendet. Die Anwendungsformen richten sich nach den Verwendungszwecken; sie sollten in jedem Fall möglichst die feinste Verteilung der erfindungsgemäßen Mittel gewährleisten.

Zur Herstellung von direkt versprühbaren Lösungen, Emulsionen, Pasten und Öldispersionen kommen Mineralölfraktionen von mittlerem bis hohem Siedepunkt wie Kerosin oder Dieselöl, ferner Kohlenteeröle usw. sowie Öle pflanzlichen oder tierischen Ursprungs, z.B. Benzol, Toluol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron usw., stark polare Lösungsmittel, z.B. Dimethylformamid, Dimethylsulfoxid, N-Methylpyrrolidon, Wasser usw. in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier-oder Emulgiermittel in Wasser homogenisiert werden. Es können aber auch aus wirksamer Substanz sowie Netz-, Haft-, Dispergier-oder Emulgiermittel und eventuell Lösungsmittel oder Öl bestehende Konzentrate hergestellte werden, die zur Verdünnung mit Wasser geeignet sind.

Als oberflächenaktive Stoffe kommen in Betracht:
Alkali-, Erdalkali-, Ammoniumsalze von Ligninsulfonsäure, Naphthalinsulfonsäure, Phenolsulfonsäuren, Alkylarylsulfonate, Alkylsulfate, Alkylsulfonate, Alkali-und Erdalkalisalze der Dibutylnaphthalinsulfonsäure, Laurylethersulfat, Fettalkoholsulfate, fettsaure Alkali-und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten und Formaldehyd, Kondensationsprodukte des Naphhalins bzw. der Naphthalinsulfonsäure mit Phenol und Formaldehyd, Polyoxyethylenoctylphenolether, ethoxyliertes Isooctylphenol, Octylphenol, Nonylphenyl, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polypropylen, Laurylalkoholpolyglykoletheracetal, Sorbitester, Lignin, Sulfitablaugen und Methylcellulose.

Pulver-, Streu-und Stäubemittel können durch Mischen oder gemeinsames Vermahlen der wirksamen Substanzen mit einem festen Trägerstoff hergestellt werden.

Granulate, z.B. Umhüllungs-, Imprägnierungs-und Homogengranulate, können durch Bindung der Wirkstoff an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Kalzium-und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz-und Nußschalenmehl, Cellulosepulver und andere feste Trägerstoffe.

Die Formulierungen enthalten zwischen 0,1 und 95 Gew.-% Wirkstoff, vorzugsweise zwischen 0,5 und 90 Gew.-%.

Zu den Mischungen können ferner Öle verschiedenen Typs, Fungizide, Nematozide, Insektizide, Bakterizide, Spurenelemente, Düngemittel, Netzmittel, Antischaummittel zur Vermeidung von Nebenwirkungen zugesetzt werden.

Die bessere biologische Wirkung von Mischungen bzw. der Anwendungsfolge gegenüber den Einzelwirkstoffen bei z.B. gräserartigen Pflanzen, Leguminosen und Ölpflanzen läßt sich überzeugend im Feldversuch zeigen.

Die nachfolgend verwendeten Triazolverbindungen haben sich dabei als besonders geeignet erwiesen. Zur vereinfachten Ergebnisdarstellung sind die verwendeten Substanzen in den Tabellen, die die Versuchsergebnisse wiedergeben, wie folgt gekennzeichnet:

A = 1-(2,4-Dichlorophenyl)-1-methyl-2-methoxy-2-(1-H-1,2,4-triazol-1-yl)-ethanol (= Beispiel 11 der EP-A-56 -087)

B = 1-Phenoxy-3-(1H-1,2,4-triazol-1-yl)-4-hydroxy-5,5 dimethylhexan (= Beispiel 9 der EP-A-40 350)

C = 1-(4-trifluormethylphenyl)-2-(1,2,4-triazol-1-yl)-3-(5-methyl-1,3-dioxan-5-yl)-propen-3-ol (= Beispiel 39 der EP-A-43 923)

D = 1-(2-Ethyl-5-methyl-1,3-dioxan-5-yl)-2-(1,2,4-triazol-1-yl-3-(4-methylphenyl)-propan-1-ol (= Beispiel 54 der EP-A-44 407)

E = N,N,N-Trimethyl-N-2-chlorethylammoniumchlorid

F = N,N-Dimethylpiperidiniumchlorid

G = 2-Chlorethylphosphonsäure

H = N,N,N-Trimethyl-N-2-chlorethylammoniumchlorid und 2-Chlorethylphosphonsäure im Verhältnis 2:1

I = N,N-Dimethylpiperidinium-chlorid und 2-Chlorethylphosphonsäure im Verhältnis 2:1

J = 5-(4-chlorophenyl)-3,4,5,9,10-pentaaza-tetra-cyclo[5,4,1,$0^{2,6}$,$0^{8,11}$]-dodeca-3,9-dien.

Die Versuche wurden auf Parzellen von jeweils 12,5 $m^2$ (Getriede) bzw. 25 $m^2$ (Erbsen und Raps) mit 4-facher Wiederholung durchgeführt. Anbau, Düngung und Verwendung von Pflanzenschutzmitteln gegen Verunkrautung, Pilz-und Schadinsektenbefall geschah standortüblich.

Die Mischungen von Bioregulatoren wurden entweder im Wege der Naßbeizung oder der Blattbehandlung aufgebracht. Die Blattbehandlung wurde mit 3,5 bar Ausbringdruck in 400 l/ha Wasser vorgenommen.

Berichtete Kornerträge basieren auf einem konstanten Trockenmassengehalt von 86 %.

Beispiele 1 bis 2

Mischungen der Substanzen A + C, angewandt bei Sommerweizen zu Beginn bis Mitte der Bestockung führen zu einer Wuchshemmung (-5 %) und Ertragsmehrung (+ 17 %), welche deutlich über derjenigen der entsprechenden Einzelkomponenten A bzw. C liegt.

Der synergistische Effekt läßt sich gemäß der Formel von S.R. Colby ("Calculating synergistic und antogomistic responses of herbicide combinations"; Weeds 15, 1967, S. 29-22)

$$E = X + Y - \frac{X.Y}{100}$$

worin E die erwartete addierte Wuchshemmung der beiden Wirkstoffe A + C
X die Wuchshemmung des Wirkstoffes A und
Y die Wuchshemmung des Wirkstoffes C ist,
ermitteln.

Die Anwendung auf Beispiel 1 führt zu folgendem Ergebnis:

$$E = 3,7 + 0,7 - \frac{3,7.0,7}{100} = 4,37 \text{ cm}$$

Gegenüber der erwarteten Wuchshemmung von 4,37 cm findet man eine Wuchshemmung von 7,5 cm, d.h. der synergistische Effekt beträgt 3,13 cm. Entsprechend kann die synergistische Wirkung der Mischung in den übrigen Beispielen ermittelt werden.

Die Pflanzenverträglichkeit der Mischung A + C wird durch die Kompensation der Mindererträge der einzelnen Substanzen A und C zu einem Mehrertrag verdeutlich:

Beispiel 1

Kultur: Sommerweizen der Sorte Schirokko
Bodenart: Ton
Aussaat: 13.03.84
Auswertung: 18.06.84

| Mittel | g Wirkstoff je ha | Behandlung Datum | Wuchshöhe (Differenz) cm | % |
|---|---|---|---|---|
| unbehandelt | 0 | - | 82,6 | 100 |
| A | 1000 | 04.05.84 | 78,9 (-3,7) | 96 (- 3) |
| C | 125 | " | 81,9 (-0,7) | 99 (- 1) |
| A + C | 1000 + 125 | " | 75,1 (-7,5) | 91 (- 9) |

Beispiel 2

Kultur: Sommerweisen der Sorte Schirokko
Bodenart: Ton
Aussaat: 13.03.84
Auswertung: 21.08.84

| Mittel | g Wirkstoff je ha | Behandlung Datum | Kornertrag (Differenz) dt/ha cm | % |
|---|---|---|---|---|
| unbehandelt | 0 | - | 64,9 | 100 |
| A | 500 | 04.05.84 | 60,0 (-4,9) | 92 (- 8) |
| C | 250 | " | 59,7 (-5,2) | 92 (- 8) |
| A + C | 500 + 250 | " | 65,8 (+0,9) | 101 (+ 1) |

Beispiel 3 bis 5

Zu ähnlichen Ergebnissen führt auch die Behandlung von Sommerweizen und Wintergerste mit Mischungen der Substanzen A + E zu Mitte bis Ende der Bestockung. Gegenüber den Einzelkomponenten konnte eine Wuchshemmung von -2 bis -6 % erzielt werden.

Beispiel 3

Kultur: Sommerweizen der Sorte Inia
Bodenart: sandiger Lehm
Aussaat: 05.06.86
Auswertung: 07.09.86

| Mittel | g Wirkstoff je ha | Behandlung Datum | Wuchshöhe (Differenz) cm | % |
|---|---|---|---|---|
| unbehandelt | 0 | - | 86,2 | 100 |
| A | 500 | 06.08.86 | 72,3 (-13,9) | 84 (-16) |
| E | 690 | " | 86,2 (- 0,0) | 100 (+/-0) |
| A + E | 500 + 690 | " | 68,8 (-17,4) | 80 (-20) |

Beispiel 4

Kultur: Wintergerste der Sorte Gerbel
Bodenart: Ton
Aussaat: 23.09.83
Auswertung: 24.05.84

| Mittel | g Wirkstoff je ha | Behandlung Datum | Wuchshöhe (Differenz) cm | % |
|---|---|---|---|---|
| unbehandelt | 0 | - | 107,3 | 100 |
| A | 500 | 17.04.84 | 106,7 (-0,6) | 99 (-1) |
| E | 460 | " | 106,3 (-1,0) | 99 (-1) |
| A + E | 500 + 460 | " | 103,5 (-3,8) | 96 (-4) |

Beispiel 5

Kultur: Wintergerste der Sorte Igri
Bodenart: lehmiger Sand
Aussaat: 27.09.84
Auswertung: 20.05.85

| Mittel | g Wirkstoff je ha | Behandlung Datum | Wuchshöhe (Differenz) cm | % |
|---|---|---|---|---|
| unbehandelt | 0 | - | 84,1 | 100 |
| A | 750 | 09.04.85 | 75,5 (- 8,6) | 90 (-10) |
| E | 1380 | " | 84,8 (+ 0,7) | 101 (+ 1) |
| A + E | 750 +1380 | " | 71,4 (-12,7) | 85 (-15) |

Beispiel 6 bis 7

Kürzere Halme haben eine größere Widerstandsfestigkeit gegenüber Lager. Am Beispiel von Wintergerste konnte durch die Anwendung der Mischung A + E zu Mitte bis Ende der Bestockung (Z. 25-29) die Standfestigkeit gegenüber den einzelnen Komponenten A und E um +17 % verbessert werden. Diese bessere Standfestigkeit führte ebenfalls zu einer Kornertragsmehrung um +11 % = 6,5 dt/ha.

Beispiel 6

Kultur: Wintergerste der Sorte Igri
Bodenart: lehmiger Sand
Aussaat: 28.09.84
Auswertung: 24.05.85

| Mittel | g Wirkstoff je ha | Behandlung Datum | Lager (Differenz) % |
|---|---|---|---|
| unbehandelt | 0 | - | 60 |
| A | 750 | 18.04.85 | 55 (- 5) |
| E | 1380 | " | 58 (- 2) |
| A + E | 750 +1380 | " | 36 (-24) |

Beispiel 7

Kultur: Wintergerste der Sorte Igri
Bodenart: lehmiger Sand
Aussaat: 28.09.84
Auswertung: 17.07.85

| Mittel | g Wirkstoff je ha | Behandlung Datum | Kornertrag (Differenz) dt/ha | % |
|---|---|---|---|---|
| unbehandelt | 0 | - | 58,8 | 100 |
| A | 750 | 18.04.85 | 66,4 (+ 7,6) | 113 (+13) |
| E | 1380 | " | 56,3 (- 2,5) | 96 (- 4) |
| A + E | 750 +1380 | " | 70,4 (+11,6) | 120 (+20) |

Beispiel 8

Auch bei Winterroggen (Secale cereale L.) bewirkt die Anwendung der Mischung A + E eine der Summe der Einzelwirkungen überlegene Wuchshemmung (-20 %). Die Anwendung erfolgte hier als Saatgutbeizung.

Beispiel 8

Kultur: Winterroggen der Sorte Danko
Bodenart: lehmiger Sand
Aussaat: 30.09.83
Auswertung: 25.10.83

| Mittel | g Wirkstoff je ha | Behandlung Datum | Wuchshöhe (Differenz) cm | % |
|---|---|---|---|---|
| unbehandelt | 0 | - | 10,0 | 100 |
| A | 10 | 29.09.83 | 9,0 (- 1,0) | 90 (-10) |
| E | 250 | " | 8,0 (- 2,0) | 80 (-20) |
| A + E | 10 + 250 | " | 5,0 (- 5,0) | 50 (-50) |

Beispiele 9 bis 11

Nicht nur die Anwendung der Substanzen A + E als Mischung, sondern auch als zeitlich aufgeteilte Folge führt zu einer überraschenden synergistischen Wirkung. Am Beispiel von Hafer (Avena sativa) wird verdeutlicht, daß z.B. die Anwendung der Substanz A während des Entwicklungsstadiums 1. Halmknoten bis zum Erscheinen des letzten Blattes (Z. 32-37) und die darauf folgende Anwendung der Substanz E während des Erscheinens des letzten Blattes bis zum Beginn des Ährenschiebens (Z. 37-39) zu einer Wuchshemmung (-3 %) sowie einer entsprechenden Verbesserung der Standfestigkeit (+41 %) und des Kornertrages (+4 %) führt.

Beispiel 9

Kultur: Hafer der Sorte Flämingskrone
Bodenart lehmiger Sand:
Aussaat: 12.03.85
Auswertung: 27.06.85

| Mittel | g Wirkstoff je ha | Behandlung Datum | Wuchshöhe (Differenz) cm | % |
|---|---|---|---|---|
| unbehandelt | 0 | - | 122,2 | 100 |
| A | 750 | 24.05.85 | 118,0 (- 4,2) | 96 (- 4) |
| E | 1380 | 30.05.85 | 109,9 (-12,3) | 90 (-10) |
| A | 750 | 24.05.85 | | |
| + E | +1380 | 30.05.85 | 101,8 (-20,4) | 83 (-17) |

Beispiel 10

Kultur: Hafer der Sorte Panther
Bodenart: stark lehmiger Sand
Aussaat: 20.03.85
Auswertung: 01.08.85

| Mittel | g Wirkstoff je ha | Behandlung Datum | Lager (Differenz) % |
|---|---|---|---|
| unbehandelt | 0 | - | 93 |
| A | 750 | 04.06.85 | 84 (- 9) |
| E | 1380 | 07.06.85 | 70 (-23) |
| A | 750 | 04.06.85 | |
| + E | +1380 | 07.06.85 | 20 (-73) |

Beispiel 11

Kultur: Hafer der Sorte Flämingskrone
Bodenart: lehmiger Sand
Aussaat: 12.03.85
Auswertung: 07.08.85

| Mittel | g Wirkstoff je ha | Behandlung Datum | Kornertrag (Differenz) dt/ha | % |
|---|---|---|---|---|
| unbehandelt | 0 | - | 69,3 | 100 |
| A | 750 | 24.05.85 | 68,0 (- 1,3) | 98 (-2) |
| E | 1380 | 30.05.85 | 70,0 (+ 0,7) | 101 (+1) |
| A | 750 | 24.05.85 | | |
| + E | +1380 | 30.05.85 | 71,3 (+ 2,0) | 103 (+3) |

Beispiele 12 bis 14

Wird die Substanz A mit Substanz G gemischt und ausgebracht, so wird auch hier eine synergistische Wirkung beobachtet. Dieses wird aus Versuchen mit Wintergerste erkennbar. Die Behandlung erfolgte als die Ligula des letzten Blattes sichtbar war bis zu Beginn des Ährenschiebens. Die Mischung führte gegenüber den Einzelanwendungen zu folgenden Wirkungen: -3 % Wuchshemmung, +5 % Mehrertrag und einer Erhöhung des Tauschendkorngewichtes um +7 % (+ 2,7 g) als Merkmal der Kornqualität.

Beispiel 12

Kultur: Wintergerste der Sorte Tapir
Bodenart: Sandiger Lehm
Aussaat: 25.09.84
Auswertung: 31.05.85

| Mittel | g Wirkstoff je ha | Behandlung Datum | Wuchshöhe (Differenz) cm | % |
|---|---|---|---|---|
| unbehandelt | 0 | - | 130,2 | 100 |
| A | 750 | 17.05.85 | 129,0 (- 1,2) | 99 (- 1) |
| G | 480 | " | 115,9 (-14,3) | 89 (-11) |
| A + G | 750 +1380 | " | 110,4 (-19,8) | 85 (-15) |

Beispiel 13

Kultur: Wintergerste der Sorte Tapir
Bodenart: toniger Lehm
Aussaat: 28.09.84
Auswertung: 15.07.85

| Mittel | g Wirkstoff je ha | Behandlung Datum | Kornertrag (Differenz) dt/ha | % |
|---|---|---|---|---|
| unbehandelt | 0 | - | 62,1 | 100 |
| A | 750 | 07.05.85 | 66,7 (+ 4,6) | 107 (+ 7) |
| G | 480 | " | 61,1 (- 1,0) | 98 (- 2) |
| A + G | 750 + 480 | " | 68,6 (+ 6,5) | 110 (+10) |

Beispiel 14

Kultur: Wintergerste der Sorte Tapir
Bodenart: sandiger Lehm
Aussaat: 25.09.84
Auswertung: 21.08.85

| Mittel | g Wirkstoff je ha | Behandlung Datum | Tausendkorngewicht (Differenz) g | % |
|---|---|---|---|---|
| unbehandelt | 0 | - | 41,6 | 100 |
| A | 750 | 17.05.85 | 42,6 (+ 1,0) | 102 (+ 2) |
| G | 480 | " | 41,5 (- 0,1) | 100 (+ /-0) |
| A + G | 750 + 480 | " | 45,2 (+ 3,6) | 109 (+ 9) |

Beispiele 15 bis 18

In Übereinstimmung mit den Versuchsergebnissen der Beispiele 9 bis 10 führte auch die zeitlich aufgeteilte Anwendungsfolge mit den Substanzen A + H zu synergistischen Wirkungen. So wurde die Substanz A während der Zeit Mitte der Bestockung bis Fühlbarwerden des 1. Halmknotens bei Wintergerste ausgebracht. In der Zeit vom Sichtbarwerden des letzten Blattes bis zum Erscheinen der Ährenspitzen erfolgte die Folgebehandlung der gleichen Pflanzen mit der Substanz H. Gegenüber den entsprechenden einfachen Anwendungen konnten durch die Folgebehandlungen synergistische Wirkungen von 3 % Wuchshemmung, 23 bis 25 % verbesserte Standfestigkeit und 2 % Mehrertrag (+1,5 dt/ha) erzielt werden.

Beispiel 15

Kultur: Wintergerste der Sorte Igri
Bodenart: Lehm
Aussaat: 28.09.84
Auswertung: 05.06.85

| Mittel | g Wirkstoff je ha | Behandlung Datum | Wuchshöhe (Differenz) cm | % |
|---|---|---|---|---|
| unbehandelt | 0 | - | 106,2 | 100 |
| A | 750 | 18.04.85 | 94,0 (-12,2) | 88 (-12) |
| H | 690 | 09.05.85 | 102,7 (- 3,5) | 97 (- 3) |
| A | 750 | 18.04.85 | | |
| + H | + 690 | 09.05.85 | 86,7 (-19,5) | 82 (-18) |

Beispiel 16

Kultur: Wintergerste der Sorte Viola
Bodenart: stark lehmiger Sand
Aussaat: 25.09.84
Auswertung: 13.06.85

| Mittel | g Wirkstoff je ha | Behandlung Datum | Lager (Differenz) % |
|---|---|---|---|
| unbehandelt | 0 | - | 100 |
| A | 750 | 04.04.85 | 83 (-17) |
| H | 690 | 13.05.85 | 100 (± 0) |
| A | 750 | 04.04.85 | 58 (-42) |
| + H | + 690 | 13.05.85 | |

Beispiel 17

Kultur: Wintergerste der Sorte Franka
Bodenart: stark lehmiger Sand
Aussaat: 30.09.84
Auswertung: 15.07.85

| Mittel | g Wirkstoff je ha | Behandlung Datum | Lager (Differenz) % |
|---|---|---|---|
| unbehandelt | 0 | - | 100 |
| A | 750 | 17.04.85 | 58 (- 42) |
| H | 690 | 30.05.85 | 88 (- 12) |
| A | 750 | 17.04.85 | 23 (- 77) |
| + H | + 690 | 20.05.85 | |

Beispiel 18

Kultur: Wintergerste der Sorte Igri
Bodenart: Lehm
Aussaat: 28.09.84
Auswertung: 17.07.85

| Mittel | g Wirkstoff je ha | Behandlung Datum | Kornertrag (Differenz) dt/ha | % |
|---|---|---|---|---|
| unbehandelt | 0 | - | 67,6 | 100 |
| A | 750 | 18.04.85 | 74,2 (+ 6,6) | 110 (+10) |
| H | 690 | 09.05.85 | 70,6 (+ 3,0) | 104 (+ 4) |
| A | 750 | 18.04.85 | 78,7 (+11,1) | 116 (+16) |
| + H | + 690 | 09.05.85 | | |

Beispiel 19

Auch die zeitlich aufgeteilte Folgebehandlung von Wintergerstenpflanzen mit den Substanzen A + I führte zu einer entsprechenden synergistischen Wirkung. Hier erfolgte die Anwendung der Substanz A zum Ende der Bestockung bis Schoßbeginn und die Ausbringung der Substanz I auf die gleichen Pflanzen zu Beginn des Ährenschiebens. Gegenüber den einfachen Pflanzenbehandlungen führte die entsprechende Folgeanwendung zu einer Verbesserung der Standfestigkeit um +31 %.

Beispiel 19

Kultur: Wintergerste der Sorte Illia
Bodenart: toniger Lehm
Aussaat: 11.10.84
Auswertung: 27.06.85

| Mittel | g Wirkstoff je ha | Behandlung Datum | Lager (Differenz) % |
|---|---|---|---|
| unbehandelt | 0 | - | 38 |
| A | 750 | 13.04.85 | 21 (- 17) |
| I | 1150 | 21.05.85 | 65 (+ 27) |
| A | 750 | 13.04.85 | 17 (- 21) |
| + I | +1150 | 21.05.85 | |

Beispiel 20 bis 22

Ähnlich wie die Mischung der Substanzen A + E (Beispiel 8) führt die Mischung A + J als Saatgutbeizung angewendet bei Sommerweizen und Winterrogen zu synergistischen Effekten. So konnte die Standfestigkeit um 20 bis 36 % und der Kornertrag um 8 % (+5,1 dt/ha) verbessert werden.

Beispiel 20

Kultur: Sommerweizen der Sorte Kolibri
Bodenart: Ton
Aussaat: 16.03.84
Auswertung: 26.06.84

| Mittel | g Wirkstoff je ha | Behandlung Datum | Lager (Differenz) % |
|---|---|---|---|
| unbehandelt | 0 | - | 50 |
| A | 2,5 | 15.03.84 | 78 (+ 28) |
| G | 2,5 | " | 13 (- 37) |
| A + G | 2,5 + 2,5 | " | 5 (- 45) |

Beispiel 21

Kultur: Sommerweizen der Sorte Kolibri
Bodenart: Ton
Aussaat: 16.03.84
Auswertung: 21.08.84

| Mittel | g Wirkstoff je ha | Behandlung Datum | Kornertrag dt/ha | (Differenz) % |
|---|---|---|---|---|
| unbehandelt | 0 | - | 63,5 | 100 |
| A | 2,5 | 15.03.84 | 61,2(- 2,3) | 96 (- 4) |
| J | 2,5 | " | 62,7(- 0,8) | 99 (- 1) |
| A + J | 2,5 + 2,5 | " | 65,5(+ 2,0) | 103 (+ 3) |

Beispiel 22

Kultur: Winterroggen der Sorte Danko
Bodenart: lehmiger Sand
Aussaat: 30.09.83
Auswertung: 10.07.84

| Mittel | g Wirkstoff je ha | Behandlung Datum | Lager (Differenz) % |
|---|---|---|---|
| unbehandelt | 0 | - | 70 |
| A | 10 | 29.09.83 | 30 (- 40) |
| J | 5 | " | 50 (- 20) |
| A + J | 10 + 5 | " | 0 (- 70) |

Daß die vorgenannten synergistischen Wirkungen von Mischungen bzw. Kombinationen mit Triazolen und anderen bioregulatorisch wirksamen Substanzen nicht nur auf ein bestimmtes Triazol beschränkt sind, wird durch die nachfolgenden Beispiele belegt.

Beispiele 23 bis 26

So führten Blattbehandlungen bei Winter-und Sommerweizen sowie Winterraps (Brassica napus L.) mit der Mischung der Substanzen B + E gegenüber den entsprechenden Einzelkomponenten zu synergistischen Wuchshemmungen. Diese betrugen bei Blattanwendung während der Bestockung bei Winterweizen 4 bis 5 % und Sommerweizen 6 %. Wurde der Raps während des Schossens behandelt, so betrug diese Wuchshemmung 13 %.

Beispiel 23

Kultur: Winterweizen der Sorte Kronjuwel
Bodenart: sandiger Lehm
Aussaat: 17.10.85
Auswertung: 22.05.86

| Mittel | g Wirkstoff je ha | Behandlung Datum | Wuchshöhe (Differenz) cm | % |
|---|---|---|---|---|
| unbehandelt | 0 | - | 67,0 | 100 |
| B | 450 | 23.04.86 | 66,0 (- 1,0) | 98 (- 2) |
| E | 345 | " | 62,0 (- 5,0) | 92 (- 8) |
| B + E | 450 + 345 | " | 57,0 (-10,0) | 85 (-15) |

Beispiel 24

Kultur: Winterweizen der Sorte Kanzler
Bodenart: lehmiger Sand
Aussaat: 28.10.85
Auswertung: 22.05.86

| Mittel | g Wirkstoff je ha | Behandlung Datum | Wuchshöhe (Differenz) cm | % |
|---|---|---|---|---|
| unbehandelt | 0 | - | 70,0 | 100 |
| B | 450 | 25.04.86 | 67,3 (- 2,7) | 96 (- 4) |
| E | 690 | " | 61,8 (- 8,2) | 88 (-12) |
| B + E | 450 + 690 | " | 56,0 (-14,0) | 80 (-20) |

Beispiel 25

Kultur: Sommerweizen der Sorte Inia
Bodenart: sandiger Lehm
Aussaat: 05.06.86
Auswertung: 10.09.86

| Mittel | g Wirkstoff je ha | Behandlung Datum | Wuchshöhe (Differenz) cm | % |
|---|---|---|---|---|
| unbehandelt | 0 | - | 89,0 | 100 |
| B | 500 | 06.08.86 | 80,0 (- 9,0) | 90 (-10) |
| E | 460 | " | 78,6 (-10,4) | 88 (-12) |
| B + E | 500 + 460 | " | 64,0 (-25,0) | 72 (-28) |

Beispiel 26

Kultur: Winterraps der Sorte Elena
Bodenart: Löß
Aussaat: 27.08.85
Auswertung: 06.05.86

| Mittel | g Wirkstoff je ha | Behandlung Datum | Wuchshöhe (Differenz) cm | % |
|---|---|---|---|---|
| unbehandelt | 0 | - | 102,0 | 100 |
| B | 450 | 17.04.86 | 59,6 (-42,4) | 58 (-42) |
| E | 1380 | " | 102,0 (+/- 0) | 100 (+/-0) |
| B + E | 450 + 250 | " | 46,3 (-55,7) | 45 (-55) |

Beispiel 27 bis 32

Auch Mischungen der Substanzen D + E führen im Vergleich zu den jeweiligen Einzelkomponenten zu einer synergistischen Wirkung. Wurde z.B. bei Winter-und Sommerweizen die Behandlung während der Bestockung durchgeführt, so konnten synergistische Wuchshemmungen von 5 bis 12 % und bei Sommerweizen von 9 bis 12 % gefunden werden.

Beispiel 27

Kultur: Sommerweizen der Sorte Inia
Bodenart: sandiger Lehm
Aussaat: 04.06.86
Auswertung: 08.09.86

| Mittel | g Wirkstoff je ha | Behandlung Datum | Wuchshöhe (Differenz) cm | % |
|---|---|---|---|---|
| unbehandelt | 0 | - | 86,2 | 100 |
| D | 250 | 07.08.86 | 76,4 (- 9,8) | 89 (-11) |
| E | 690 | " | 85,2 (- 1,0) | 99 (- 1) |
| D + E | 250 +1380 | " | 67,9 (-18,3) | 79 (-21) |

Beispiel 28

Kultur: Sommerweizen der Sorte Inia
Bodenart: sandiger Lehm
Aussaat: 05.06.86
Auswertung: 10.09.86

| Mittel | g Wirkstoff je ha | Behandlung Datum | Wuchshöhe (Differenz) cm | % |
|---|---|---|---|---|
| unbehandelt | 0 | - | 89,0 | 100 |
| D | 500 | 06.08.86 | 71,6 (-17,4) | 80 (-20) |
| E | 460 | " | 78,6 (-10,4) | 88 (-12) |
| D + E | 500 + 460 | " | 50,0 (-39,4) | 56 (-44) |

Beispiel 29

Kultur: Winterweizen der Sorte Dolomit
Bodenart: Ton
Aussaat: 17.10.85
Auswertung: 22.05.86

| Mittel | g Wirkstoff je ha | Behandlung Datum | Wuchshöhe (Differenz) cm | % |
|---|---|---|---|---|
| unbehandelt | 0 | - | 76,8 | 100 |
| D | 500 | 25.04.86 | 64,2 (-12,6) | 84 (-16) |
| E | 460 | " | 70,2 (- 6,3) | 91 (- 9) |
| D + E | 500 + 460 | " | 50,0 (-26,8) | 65 (-35) |

Beispiel 30

Kultur: Winterweizen der Sorte Kanzler
Bodenart: sandiger Lehm
Aussaat: 16.10.85
Auswertung: 22.05.86

| Mittel | g Wirkstoff je ha | Behandlung Datum | Wuchshöhe (Differenz) cm | % |
|---|---|---|---|---|
| unbehandelt | 0 | - | 54,8 | 100 |
| D | 500 | 25.04.86 | 45,0 (- 9,8) | 82 (-18) |
| E | 690 | " | 50,0 (- 4,8) | 91 (- 9) |
| D + E | 500 + 690 | " | 37,5 (-17,3) | 68 (-32) |

Beispiel 31

Kultur: Winterweizen der Sorte Dolomit
Bodenart: sandiger Lehm
Aussaat: 17.10.85
Auswertung: 22.05.86

| Mittel | g Wirkstoff je ha | Behandlung Datum | Wuchshohe (Differenz) cm | % |
|---|---|---|---|---|
| unbehandelt | 0 | - | 74,2 | 100 |
| D | 750 | 23.04.86 | 62,5 (-11,7) | 84 (-16) |
| E | 460 | " | 69,8 (- 4,4) | 94 (- 6) |
| D + E | 750 + 460 | " | 54,2 (-20,0) | 73 (-27) |

Beispiel 32

Kultur: Winterweizen der Sorte Dolomit
Bodenart: sandiger Lehm
Aussaat: 17.10.85
Auswertung: 22.05.86

| Mittel | g Wirkstoff je ha | Behandlung Datum | Wuchshöhe (Differenz) cm | % |
|---|---|---|---|---|
| unbehandelt | 0 | - | 74,2 | 100 |
| D | 750 | 23.04.86 | 62,5 (-11,7) | 84 (-16) |
| E | 690 | " | 70,5 (- 3,7) | 95 (- 5) |
| D + E | 750 + 690 | " | 49,8 (-24,4) | 67 (-33) |

Beispiel 33

Synergistische Wirkungen von Mischungen aus Triazolen und anderen Bioregulatoren konnten nicht nur an gräserartigen Pflanzen und Ölpflanzen, sondern auch bei Leguminosen festgestellt werden. So führte beispielsweise die Blattbehandlung während des Blütenknospenstadiums von Erbsen (Pisum sativum L.) mit der Mischung D + H gegenüber den entsprechenden Einzelkomponenten D und H zu einer synergistischen Wuchshemmung von -10%.

Beispiel 33

Kultur: Erbsen der Sorte Stehgold
Bodenart: sandiger Lehm
Aussaat: 07.04.86
Auswertung: 18.06.86

| Mittel | Wirkstoff g/ha | Behandlung Datum | Wuchshöhe (Differenz) cm | % |
|---|---|---|---|---|
| unbehandelt | 0 | - | 58,0 | 100 |
| D | 500 | 21.04.86 | 54,5 (- 3,5) | 94 (- 6) |
| H | 1380 | " | 55,7 (- 2,3) | 96 (- 4) |
| D + H | 500 + 1380 | " | 46,4 (-11,6) | 80 (-20) |

Beispiel 34

Die synergistische Wirkung der erfindungsgemäßen Mischungen in Baumwolle, Sommer-und Winterraps zeigen die Beispiele 34 bis 39.
Kultur: Baumwolle der Sorte IAC-20
Bodenart: sandiger Lehm
Aussaat: 05.11.86
Auswertung: 15.04.87

| Mittel | Wirkstoff g/ha | Behandlung Datum | Ertrag (Differenz) kg/ha | % |
|---|---|---|---|---|
| unbehandelt | 0 | - | 1340 | 100 |
| B | 500 | 14.01.87 | 1420(+ 80) | 106 (+ 6) |
| F | 50 | " | 1420(+ 80) | 106 (+ 6) |
| B + F | 500 + 50 | " | 1621(+281) | 121 (+21) |

Beispiel 35

Kultur: Sommerraps der Sorte Callypso
Bodenart: sandiger Lehm
Aussaat: 10.03.87
Auswertung:
Lager: 20.08.87
Ertrag: 30.09.87

| Mittel | Wirkstoff g/ha | Behandlung Datum | Lagerfläche (Differenz) % | Ertrag (Differenz) dt/ha | % |
|---|---|---|---|---|---|
| unbehandelt | 0 | - | 100 | 15,2 | 100 |
| B | 300 | 30.06.87 | 100 (± 0) | 20,7 (+5,5) | 136 (+36) |
| I | 920 | " | 100 (± 0) | 15,8 (+0,6) | 104 (+ 4) |
| B + I | 300 + 920 | " | 0 (-100) | 21,7 (+6,5) | 143 (+43) |

Beispiel 36

Kultur: Sommerraps der Sorte Westor
Bodenart: sandiger Lehm
Aussaat: 09.06.87
Auswertung:
Wuchshöhe: 27.07.87
Lager: 06.08.87

| Mittel | Wirkstoff g/ha | Behandlung Datum | Wuchshöhe cm | (Differenz) % | Lager | (Differenz) % |
|---|---|---|---|---|---|---|
| unbehandelt | 0 | - | 101,7 | 100 | 47 | |
| B | 125 | 14.07.87 | 103,3(+1,6) | 94 (- 6) | 28 | (- 19) |
| E | 460 | " | 101,7(± 0) | 96 (- 4) | 30 | (- 17) |
| B + E | 125 + 460 | " | 98,0(-3,7) | 80 (-20) | 8 | (- 30) |

Beispiel 37

Kultur: Sommerraps der Sorte Callypso
Bodenart: sandiger Lehm
Aussaat: 12.03.87
Auswertung:
Lager: 27.07.87
Ertrag: 30.09.87

| Mittel | Wirkstoff g/ha | Behandlung Datum | Lagerfläche % | (Diff.) | Ertrag dt/ha | (Differenz) | % | |
|---|---|---|---|---|---|---|---|---|
| unbehandelt | 0 | - | 100 | | 16,0 | | 100 | |
| B | 300 | 19.06.87 | 75 | (- 25) | 19,8 | (+3,8) | 124 | (+24) |
| E | 920 | " | 100 | (± 0) | 16,3 | (+0,3) | 102 | (+ 2) |
| B + E | 300 + 920 | " | 0 | (-100) | 21,4 | (+5,4) | 134 | (+34) |

Beispiel 38

Kultur: Winterraps der Sorte Jupiter
Bodenart: sandiger Lehm
Aussaat: 26.08.86
Auswertung:
Wuchshöhe: 24.05.87
Lager: 21.08.87

| Mittel | Wirkstoff g/ha | Behandlung Datum | Wuchshöhe cm | (Differenz) | % | | Lager neigung | (Differenz) % |
|---|---|---|---|---|---|---|---|---|
| unbehandelt | 0 | - | 106,0 | | 100 | | 72 | |
| B | 450 | 05.05.87 | 97,5 | (- 8,5) | 92 | (- 8) | 48 | (- 24) |
| E | 1380 | " | 104,7 | (- 1,1) | 99 | (- 1) | 62 | (- 10) |
| B + E | 450 + 1380 | " | 88,0 | (-18,0) | 89 | (-17) | 20 | (- 52) |

Beispiel 39

Kultur: Winterraps der Sorte Lirabin
Bodenart: sandiger Lehm
Aussaat: 14.08.87
Auswertung:
Wuchshöhe: 20.05.87
Lagerneigung: 04.08.87
Ernte: 20.08.87

| Mittel | Wirkstoff g/ha | Behandlung Datum | Wuchshöhe (Differenz) cm | % | Lagerneigung (Differenz) % | Ertrag (Differenz) dt/ha | % |
|---|---|---|---|---|---|---|---|
| unbeh. | 0 | - | 138,4 | 100 | 70 | 32,4 | 100 |
| B | 455 | 08.05.87 | 133,2(-3,2) | 98 (-2) | 45(-25) | 39,1(+6,7) | 120(+20) |
| H | 1380 | " | 135,1(-1,3) | 99 (-1) | 74(+ 4) | 36,7(4,3) | 113(+13) |
| B + H | 450+1380 | " | 119,4(-17 ) | 88(-12) | 18(-52) | 51,1(18,7) | 157(+57) |

## Ansprüche

1. Mittel zur Regulierung der Pflanzenentwicklung, enthaltend eine synergistische Mischung aus einer wachstumsregulatorisch wirksamen Triazolverbindung der allgemeinen Formel Ia, Ib, Ic oder Id

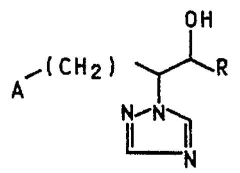
Ia

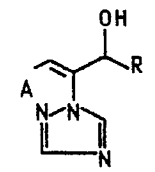
Ib

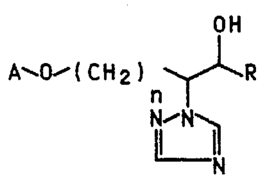
Ic

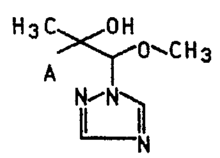
Id

wobei A unsubstituiertes oder durch Halogen, $C_1$-$C_4$-Alkyl, $C_1$-$C_4$-Alkoxy oder $CF_3$ substituiertes Phenyl und R tert.-Butyl oder die Gruppe

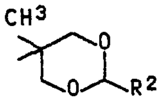

in der $R^2$ für Wasserstoff, Methyl oder Ethyl steht, bedeutet und n eine ganze Zahl von 2 bis 5 darstellt und entweder
einem quaternär substituierten Thianium-oder Ammoniumsalz aus der Gruppe, die umfaßt:
N,N-Dimethyl-azacycloheptaniumsalze
N,N-Dimethyl-piperidiniumsalze
N,N-Dimethyl-hexahydropyridaziniumsalze
N,N-Dimethyl-tetrahydropyridaziniumsalze
N-Methyl-pyridiumsalze
N,N-Dimethyl-pyrrolidiumsalze
S-Methyl-thiacyclohexaniumsalze und
N,N,N-Trimethyl-N-2-chlorethylammoniumsalz
und/oder
einer Phosphonsäureverbindung aus der Gruppe, die umfaßt:
2-Chlorethylphosphonsäure
2-Chlorethylaminoethylphosphonsäure
2-Chlorethylaminobutylphosphonsäure
2-Chlorethylphosphonsäure-N,N-dimethylamid
2-Chlorethylphosphonsäure-N-methylamid
Vinylphosphonsäure
Propylphosphonsäure
Phosphonmethylglycin
Bis-phosphonomethylglycin und
Benzyl-phosphonsäure
und/oder
der Verbindung 5-(4-Chlorophenyl)-3,4,5,9,10-pentaaza-tetra-cyclo-[5,4,1,$0^{2,6}$,$0^{8,11}$]dodeca-3,9-dien.

2. Verfahren zur Regulierung der Pflanzenentwicklung, dadurch gekennzeichnet, daß man den Boden, das Saatgut und/oder die Pflanzen mit einer synergistischen Mischung gemäß Anspruch 1 behandelt.

3. Verfahren nach Anspruch 2, dadurch gekennzeichnet, daß man den Boden, das Saatgut und/oder die Pflanzen mit 0,1 bis 95 Gew.-% einer synergistischen Mischung gemäß Anspruch 1 neben üblichen Trägerstoffen behandelt.

4. Mittel nach Anspruch 1, enthaltend eine synergistische Mischung aus einer Triazolverbindung Ia, Ib, Ic oder Id und N,N-Dimethyl-piperidiniumchlorid, 2-Chlorethylphosphonsäure oder 5-(4-Chlorophenyl)-3,4,5,9,10-pentaaza-tetra-cyclo[5,4,1,$0^{2,6}$,$0^{8,11}$]dodeca-3,9-dien.

5. Mittel nach Anspruch 1, enthaltend eine synergistische Mischung aus einer Triazolverbindung Ia, Ib, Ic oder Id und N,N-Dimethyl-piperidiniumchlorid oder N,N,N-Trimethyl-N-2-chlorethylammoniumchlorid jeweils im Gemisch mit 2-Chlorethylphosphonsäure.